Europäisches Patentamt

European Patent Office

Office européen des brevets

(19)

(11) Veröffentlichungsnummer: **0 052 851**
**B1**

(12)

# EUROPÄISCHE PATENTSCHRIFT

(45) Veröffentlichungstag der Patentschrift:
31.10.84

(51) Int. Cl.³: **C 04 B 35/56**

(21) Anmeldenummer: 81109736.9

(22) Anmeldetag: 17.11.81

(54) Polykristalliner Formkörper aus Siliziumkarbid und Verfahren zu seiner Herstellung.

(30) Priorität: 24.11.80 DE 3044162

(43) Veröffentlichungstag der Anmeldung:
02.06.82 Patentblatt 82/22

(45) Bekanntmachung des Hinweises auf die Patenterteilung:
31.10.84 Patentblatt 84/44

(84) Benannte Vertragsstaaten:
DE FR GB IT NL SE

(56) Entgegenhaltungen:
DE - A - 2 916 817
DE - A - 2 934 968
DE - B - 1 667 655
GB - A - 992 257
US - A - 4 097 293

(73) Patentinhaber: Feldmühle Aktiengesellschaft,
Fritz-Vomfelde-Platz 4, D-4000 Düsseldorf 11 (DE)

(72) Erfinder: Gugel, Ernst, Prof. Dr., Dipl.-Ing.,
Lauterburgstrasse 47a, D-8633 Rödental (DE)
Erfinder: Leimer, Gerhard, Dr., Dipl.-Ing., Sonnenleite 23,
D-8633 Rödental (DE)

(74) Vertreter: Uhlmann, Hans, Dr. rer.nat., Dipl.-Chem. et al,
Gladbacher Strasse 189, D-4060 Viersen 1 (DE)

## Beschreibung

Die Erfindung bezieht sich auf einen polykristallinen Formkörper aus Siliziumkarbid mit einer Dichte von mindestens 98% der theoretischen Dichte des Siliziumkarbids und richtet sich ferner auf ein Verfahren zur Herstellung solcher Formkörper.

Polykristalline Formkörper aus Siliziumkarbid zeichnen sich durch viele wertvolle Eigenschaften aus, wie Oxidationsbeständigkeit und Temperaturwechselbeständigkeit, günstiges Kriechverhalten, relativ niedrige Dichte, geringe thermische Ausdehnung sowie hohe Wärmeleitfähigkeit und große Härte. Aufgrund dieser Eigenschaften läßt sich Siliziumkarbid z. B. mit Vorteil als Werkstoff für Hochtemperaturmaschinenbauteile verwenden.

Vergleichsweise hohe Festigkeitswerte bis zu 600 N/mm² und mehr erreicht man mit heißgepreßtem Siliziumkarbid, welches vom stofflichen Aufbau her praktisch nur Siliziumkarbid neben geringen Mengen an Aluminium-, Bor- und Eisenverbindungen enthält. Allerdings ist dieses Verfahren aufwendig, so daß es aus wirtschaftlichen Gründen nicht zum Einsatz kommt. Außerdem eignet sich das Verfahren nur für relativ einfache Formen.

Die DE-A-2 934 986 beschreibt ein gesintertes Siliziumkarbidprodukt mit einer Dichte von mehr als 95% der theoretischen Dichte, das durch Heißpressen hergestellt worden ist und wobei das Siliziumkarbidpulver mit 1 bis 10 Gew.-% der reduzierenden Metalle Beryllium, Magnesium, Kalzium, Chrom, Eisen, Kobalt, Nickel, Bor, Aluminium, Gallium usw. bereits bei der Herstellung mittels des Acheson-Verfahrens dotiert wurde. Die Zugabe dieser reduzierenden Metalle soll eine aufwendige Mahlbehandlung des Siliziumkarbidpulvers vor dem Sintern mittels Heißverpressung vermeiden und die Herstellung des Siliziumkarbidpulvers erleichtern. Nachteilig bei dem nach diesem Verfahren erzeugten Produkt ist, daß aufgrund des Heißpreßverfahrens nur Körper relativ einfacher Geometrie erhältlich sind und somit bei komplizierten Bauteilen eine aufwendige Bearbeitung mittels Diamantwerkzeugen notwendig wird.

Wesentlich freier in der Formgestaltung ist man bei drucklosem Sintern von Siliziumkarbid.

In der DE-A-2 449 662 ist ein drucklos gesintertes Siliziumkarbid beschrieben. Das wesentliche dieser Lehre besteht darin, äußerst feinkörniges Siliziumkarbidpulver zu verwenden, um eine bezüglich Elektroneutralität stark gestörte und damit sinteraktive Oberfläche zu erhalten, d. h. Pulver einzusetzen, bei denen Atombeweglichkeiten möglich sind. Ausgegangen wird von der β-Modifikation des Siliziumkarbids, weil bei dieser das Herstellungsverfahren so gewählt werden kann, daß das Siliziumkarbid äußerst feinkörnig anfällt und damit eine zusätzliche Zerkleinerung entfällt. Ein wesentlicher Teil des Herstellungsverfahrens besteht darin, durch Zusätze von Bor und Kohlenstoff das Verhältnis von Korngrenzenenergie zur Oberflächenenergie in ein für ein Sintern unter Schwindung günstiges Verhältnis zu rücken. Da sich Bor in Siliziumkarbid geringfügig löst, erniedrigt es die Korngrenzenenergie, während Kohlenstoff die Oberflächenenergie erhöht, in dem er das Siliziumkarbid von der dünnen, immer vorhandenen SiO₂-Haut befreit.

In der DE-A 2 624 641 wird beschrieben, daß auch ein druckloses Sintern der α-Modifikation von Siliziumkarbid möglich ist, wenn dieses Siliziumkarbid entsprechend fein aufbereitet ist. Als Sinterzusätze werden ebenfalls Bor und Kohlenstoff verwendet. Ein wesentlicher Vorteil der Möglichkeit des Einsatzes der α-Modifikation von Siliziumkarbid liegt darin, daß es hier zu keiner Phasenumwandlung kommen kann, wie es beim Einsatz der β-Modifikation des Siliziumkarbids beim Überschreiten bestimmter Sintertemperaturen der Fall ist. Diese Phasenumwandlung bei der β-Modifikation des Siliziumkarbids ist mit einem Riesenkornwachstum verbunden, das eine weitere Verdichtung verhindert oder, falls der Werkstoff schon dicht ist, zu schlechten Festigkeiten führt. Der Sintertemperaturbereich für eine optimale Verdichtung ohne Phasenumwandlung ist für die β-Modifikation des Siliziumkarbids relativ eng und somit in großen Ofenanlagen technisch nur unter erheblichem Aufwand zu beherrschen.

In der EP-A 0 004 031 ist ein dichter, polykristalliner Formkörper aus α-Siliziumkarbid und ein Verfahren zu seiner Herstellung durch drucklose Sinterung beschrieben, bei dem α-Siliziumkarbid in Submikronpulverform zusammen mit geringen Mengen eines Aluminium enthaltenden Zusatzes, wie Aluminiumpulver oder einer nicht oxidischen Aluminiumverbindung und eines Kohlenstoff enthaltenden Zusatzes, wie Ruß, Phenolformaldehydkondensationsprodukte oder Steinkohlenteerpech unter Formgebung kalt verpreßt und anschließend bei Temperaturen von 2000 bis 2300° C drucklos gesintert wird. Dabei wird von eigenen Versuchen ausgegangen, mit denen nachgewiesen wurde, daß auch bei Verwendung von α-Siliziumkarbidpulver als Ausgangsmaterial im drucklosen Verfahren mit Bor und Kohlenstoff enthaltenden Zusätzen bei hohen Sintertemperaturen übertriebenes Kornwachstum auftritt, das zu einem inhomogenen Mikrogefüge im fertigen Sinterkörper führt. Damit weisen die so erhaltenen Sinterkörper eine Dichte von etwa 96% der theoretischen Dichte auf, jedoch sind die bei Temperaturen ab 2100° C gesinterten Proben stark rekristallisiert und ihre Heißbiegefestigkeit liegt unterhalb von 300 N/mm². Nur die bei 2050° C gesinterten Proben weisen ein homogenes, feinkörniges Mikrogefüge der durchschnittlichen Korngröße von 5 µm auf.

Daraus wird gefolgert, daß die drucklose Sinterung von Siliziumkarbid mit Bor enthaltenden Zusätzen nur schwierig zu bewerkstelligen ist, wenn Sinterkörper mit sowohl hoher Dichte als auch gleichmäßigem, feinkörnigem Mikrogefüge erhalten werden sollen. Um polykristalline Formkörper aus Siliziumkarbid mit verbesserten Eigenschaften, insbesondere einer hohen Wärmefestigkeit zur Verfügung stellen zu können, die auf einfache Weise hergestellt werden können, wird nach der EP-A 0 004 031 Aluminium und Kohlenstoff als Zusatz eingesetzt. Dabei liegen Aluminium sowie ggf. vorhandener Stickstoff und Sauerstoff im wesentlichen in Form einer festen Lösung im Siliziumkarbidgitter vor, so daß sie beispielsweise bis zu einer 2400fachen Vergrößerung nicht als getrennte Phase nachgewiesen werden konnten. Mit solchen Zusätzen kommt man zu Biegebruchfestigkeiten der Sinterkörper bei Raumtemperatur von mindestens 500 N/mm², die beim Temperaturanstieg bis 1600°C erhalten bleibt. Allerdings ist diese Biegebruchfestigkeit nach dem Dreipunktverfahren gemessen, bei dem sich höhere Meßwerte ergeben als bei dem heute verwendeten Vierpunktverfahren. Insbesondere aber zeigen auch die nach diesem offenbar am weitesten fortgeschrittenen Verfahren hergestellten polykristallinen Formkörper eine vergleichsweise hohe Streuung, d. h. die fertigen Formkörper weisen untereinander ggf. stark voneinander abweichende Festigkeiten auf.

Aufgabe der Erfindung ist es, einen polykristallinen Formkörper aus Siliziumkarbid vorzuschlagen, der drucklos gesintert ist und trotzdem Festigkeitswerte in der Größenordnung derjenigen von Formkörpern aus heißgepreßtem Siliziumkarbid aufweist und darüber hinaus mit vergleichsweise geringer Streuung hergestellt werden kann.

Diese Aufgabe wird bei einem polykristallinen Formkörper mit einer Dichte von mindestens 98% der theoretischen Dichte des Siliziumkarbids, der mindestens 92 Gew.-% $\alpha$- und/oder $\beta$-Siliziumkarbid, das in Form eines homogenen Gefüges mit Korngrößen von maximal 10 µm vorliegt und Bor bis zu 3 Gew.-% enthält, dadurch gelöst, daß er 0,3 bis 3 Gew.-% Bor und einen Anteil von 0,5 bis 5 Gew.-% der reduzierend wirkenden Metalle Titan, Zirkonium, Hafnium, Skandium, Yttrium, Lanthan und Cer einzeln oder in Gemischen davon enthält, eine Biegebruchfestigkeit (gemessen nach dem Vierpunktverfahren) bis 1400°C von mindestens 500 N/mm² aufweist und im wesentlichen frei von freiem Kohlenstoff ist.

Das erfindungsgemäße Verfahren zur Herstellung eines solchen Formkörpers, bei dem das Ausgangsmaterial drucklos gesintert wird, kennzeichnet sich dadurch, daß dem Siliziumkarbidausgangspulver neben 0,3 bis 3 Gew.-% Bor 0,5 bis 5 Gew.-% der reduzierend wirkenden Metalle Titan, Zirkonium, Hafnium, Skandium, Yttrium, Lanthan und Cer allein oder in Mischung zugesetzt wird, diese Mischung geformt und der Formkörper bei Temperaturen von 1900 bis 2200°C im Vakuum oder unter einer Schutzgasatmosphäre drucklos gesintert wird.

Eine Verbesserung läßt sich in Weiterbildung der Erfindung noch dadurch erzielen, daß besonders feines und superreines Siliziumkarbid als Ausgangsmaterial verwendet wird. So wird man beispielsweise als Siliziumkarbidpulver vorteilhaft ein solches mit einer spezifischen Oberfläche zwischen 10 und 20 m²/g verwenden, bei dem mindestens 95% der Körnung unterhalb 1 µm liegen und das frei von zu Metallen reduzierbaren Verunreinigungen ist, die bei der Sintertemperatur schmelzflüssig sind.

Mit diesem Verfahren lassen sich mit Sicherheit Werte erreichen, die vergleichbar sind mit jenen, die man mit heißgepreßten Siliziumkarbidformkörpern erreichen kann.

Eine weitere Verbesserung des Verfahrens läßt sich dadurch erzielen, daß der drucklos gesinterte Formkörper einer zusätzlichen heißisostatischen Preßnachbehandlung ausgesetzt wird.

Die nachfolgende Tabelle zeigt 4 verschiedene Siliziumkarbidformkörper, bei denen der unter I aufgeführte Formkörper nach dem nachgewiesenen Stand der Technik erzeugt ist, der unter II aufgeführte Formkörper nach der vorliegenden Erfindung, der unter III aufgeführte Formkörper nach der Erfindung unter besonderer Auswahl der Feinkörnigkeit des eingesetzten Siliziumkarbids. Der unter IV angegebene Formkörper entspricht demjenigen, bei dem nach Beispiel III verfahren ist, jedoch besonders reines Siliziumkarbid zum Einsatz kam. Man erkennt deutlich die durch die Erfindung möglichen Steigerungen der einzelnen kritischen Werte des Formkörpers.

| Probe | Zusatz | Behandlung | Rohdichte RG g/cm³ | Biegebruchfestigkeit N/mm² max. | Ø | Weibull-modul m |
|---|---|---|---|---|---|---|
| I | 2,5 C 0,5 B | — | 3,15 | 350 | 300 | 5 |
| II | 2,5 Zr 0,5 B | — | 3,18 | 550 | 450 | 5 |
| III | 2,5 Zr 0,5 B | Windsichten | 3,17 | 570 | 510 | 8 |
| IV | 2,5 Zr 0,5 B | Windsichten und superreines SiC | 3,18 | 580 | 550 | 12 |

# 0 052 851

## Patentansprüche

1. Polykristalliner Formkörper mit einer Dichte von mindestens 98% der theoretischen Dichte des Siliziumkarbids, der mindestens 92 Gew.-% $\alpha$- und/oder $\beta$-Siliziumkarbid, das in Form eines homogenen Gefüges mit Korngrößen von maximal 10 µm vorliegt, und Bor bis zu 3 Gew.-% enthält, dadurch gekennzeichnet, daß er 0,3 bis 3 Gew.-% Bor und einen Anteil von 0,5 bis 5 Gew.-% der reduzierend wirkenden Metalle Titan, Zirkonium, Hafnium, Skandium, Yttrium, Lanthan und Cer einzeln oder in Gemischen davon enthält, eine Biegebruchfestigkeit (gemessen nach dem Vierpunktverfahren) bis 1400° C von mindestens 500 N/mm² aufweist und im wesentlichen frei von freiem Kohlenstoff ist.

2. Verfahren zur Herstellung von Formkörpern nach Anspruch 1, bei dem das Ausgangsmaterial drucklos gesintert wird, dadurch gekennzeichnet, daß dem Siliziumkarbidausgangspulver neben 0,3 bis 3 Gew.-% Bor 0,5 bis 5 Gew.-% der reduzierend wirkenden Metalle Titan, Zirkonium, Hafnium, Skandium, Yttrium, Lanthan und Cer allein oder in Mischung zugesetzt wird, diese Mischung geformt und der Formkörper bei Temperaturen von 1900 bis 2200° C im Vakuum oder unter einer Schutzgasatmosphäre drucklos gesintert wird.

3. Verfahren nach Anspruch 2, dadurch gekennzeichnet, daß als Siliziumkarbidpulver ein solches mit einer spezifischen Oberfläche zwischen 10 und 20 m²/g verwendet wird, bei dem mindestens 95% der Körnung unterhalb 1 µm liegen und das frei von zu Metallen reduzierbaren Verunreinigungen ist, die bei der Sintertemperatur schmelzflüssig sind.

4. Verfahren nach Anspruch 2 oder 3, dadurch gekennzeichnet, daß der Formkörper einer heißisostatischen Preßnachbehandlung ausgesetzt wird.

## Claims

1. Polycrystalline shaped article having a density of at least 98% of the theoretical density of silicon carbide and containing at least 92% by weight of $\alpha$- and/or $\beta$-silicon carbide in the form of a homogeneous structure having maximum particle sizes of 10 µm, and up to 3% by weight of boron, characterised in that it contains from 0.3 to 3% by weight of boron and an amount of from 0.5 to 5% by weight of the reducing metals titanium, zirconium, hafnium, scandium, yttrium, lanthanum and cerium, alone or in mixtures thereof, has a bending strength (measured by the fourpoint method) at up to 1400° C of at least 500 N/mm² and contains substantially no free carbon.

2. Process for the manufacture of shaped articles according to claim 1, in which the starting material is subjected to pressureless sintering, characterised in that, in addition to from 0.3 to 3% by weight of boron, from 0.5 to 5% by weight of the reducing metals titanium, zirconium, hafnium, scandium, yttrium, lanthanum and cerium, alone or in mixtures thereof, are incorporated with the silicon carbide starting powder, the resulting mixture is shaped, and the shaped article is subjected to pressureless sintering at temperatures of from 1900 to 2200° C in vacuo or under the atmosphere of a protective gas.

3. Process according to claim 2, characterised in that there is used as silicon carbide powder one having a specific surface area of from 10 to 20 m²/g in which at least 95% of the grains are less than 1 µm and which is free of impurities that can be reduced to metals and that are molten at the sintering temperature.

4. Process according to claim 2 or 3, characterised in that the shaped article is subjected to aftertreatment in the form of hot isostatic pressing.

## Revendications

1. Corps façonné polycristallin avec une densité d'au moins 98% de la densité théorique du carbure de silicium, qui contient au moins 92% en poids de carbure de silicium $\alpha$ et/ou $\beta$, qui se présente sous la forme d'une structure homogène avec une grosseur de grain maximale de 10 µm, et du bore jusqu'à 3% en poids, caractérisé en ce qu'il contient 0,3 à 3% en poids de bore et une partie de 0,5 à 5% en poids des métaux à effet réducteur titane, zirconium, hafnium, scandium, yttrium, lanthane et cérium, seuls ou en mélanges, présente une résistance à la flexion (mesurée par le procédé à quatre points) d'au moins 500 N/mm² jusqu'à 1400° C, et est essentiellement exempt de carbone libre.

2. Procédé pour la fabrication de corps façonnés selon la revendication 1, dans lequel la matière de départ est frittée sans pression, caractérisé en ce qu'on ajoute à la poudre de départ de carbure de silicium, outre 0,3 à 3% en poids de bore, 0,5 à 5% en poids des métaux à effet réducteur titane, zirconium, hafnium, scandium, yttrium, lanthane et cérium, seuls ou en mélanges; on façonne ce mélange; et on fritte le corps façonné à des températures de 1900 à 2200° C sans pression, sous vide ou sous une atmosphère de gaz protecteur.

3. Procédé selon la revendication 2, caractérisé en ce qu'on utilise en tant que poudre de carbure de silicium une telle poudre ayant une surface spécifique comprise entre 10 et 20 m²/g, dans laquelle au moins 95% de la granulométrie est inférieure à 1 µm, et qui est exempte d'impuretés réductibles en métaux, qui sont fusibles à la température de frittage.

4. Procédé selon la revendication 2 ou 3, caractérisé en ce que le corps façonné est soumis à un post-traitement de pressage par compression isostatique à chaud.